# EUROPÄISCHE PATENTSCHRIFT

(11) **EP 1 972 384 B1**
(45) Veröffentlichungstag und Bekanntmachung des Hinweises auf die Patenterteilung: **02.01.2013**
(21) Anmeldenummer: 08004439.9
(22) Anmeldetag: 11.03.2008
(51) Int. Cl.: B05B 17/08, A01K 63/04, E04H 4/12

(54) **Druckwasserbehälter**
Pressurised water container
Récipient d'eau sous pression

(30) Priorität: 23.03.2007 DE 102007014570
(43) Veröffentlichungstag der Anmeldung: 24.09.2008
(73) Patentinhaber: Oase GmbH, 48477 Hörstel-Riesenbeck (DE)
(72) Erfinder: Brune, Dominik, 48346 Ostbevern (DE)
(74) Vertreter: Engelmann, Kristiana

(56) Entgegenhaltungen:
- EP-A- 0 527 580
- EP-A- 0 619 070
- DE-A1- 19 814 323

## Beschreibung

Die Erfindung betrifft einen druckbeaufschlagten Wasserbehälter nach dem Oberbegriff des Anspruchs 1, wie er in der Springbrunnen-, Teich-, Schwimmbad- oder Aquarientechnik zum Einsatz kommt. Durch derartige Behälter wird Wasser druckbeaufschlagt hindurchgedrückt und dadurch beispielsweise gefiltert, einer Düse zugeführt oder dergleichen mehr mechanischen Einwirkungen unterzogen. Sowohl der Behälter selbst als auch in ihm angeordnete Komponenten bedürfen einer gewissen Wartung, so dass der Behälter zu öffnen und wieder verschließbar sein muß. Beim Verschließen ist es wesentlich, wieder eine Wasserdichtigkeit herzustellen, die den im Betrieb anliegenden Wasserdrücken standhält. Gängige Verschlußmechanismen sind daher beispielsweise die Verbindung der Gehäuseteile über mehrere Klammern bzw. Kniehebelverschlüsse; wie z.B. in der EP 0 619 070 A2 gezeigt, oder das Umgreifen eines an beiden Gehäuseteilen vorhandenen Flansches mittels eines Spannrings. Diese Verschlüsse sind von einer einzelnen Person schwer ordnungsgemäß zu schließen. Bei der Verwendung von Klammern oder Kniehebeln müssen die Behälterteile gleichmäßig zusammengedrückt und unter Beibehaltung dieses Drucks sämtliche Klammern geschlossen werden. Auch ein Spannring muß angezogen und geschlossen werden, während beide Behälterteile gegeneinandergedrückt sind. Gelingt es nicht, die Spannung während des Verschließens an allen Behälterseiten gleichmäßig aufrechtzuerhalten, so kommt es zu einem Verkannten und daraus resultierenden Undichtigkeiten der Verbindung.

Die DE 198 14 323 A1 zeigt in ihren Figuren 7 bis 11 einen Aquarienfilter mit Wasserbehälter, dessen Gehäuseteile korrespondierender Ausnehmungen und Vorsprünge aufweisen und durch Verdrehung gegeneinander verschließbar bzw. zu öffnen sind.

Der Erfindung liegt daher die Aufgabe zugrunde, einen druckbeaufschlagbaren Wasserbehälter zu schaffen, der auf einfachere Weise wasserdicht verschließbar ist.

Diese Aufgabe wird erfindungsgemäß durch einen Druckwasserbehälter mit den Merkmalen des Anspruchs 1 gelöst.

Durch das Vorsehen eines erfindungsgemäßen Unterteilungselements zwischen den Gehäuseteilen mit Löchern, durch die sich die Vorsprünge des einen Gehäuseteils hindurcherstrecken, muss eine vorhandene Dichtung nahezu keine Schubspannungen aufnehmen.

Vorzugsweise sollten mehrere Vorsprünge und korrespondierende Ausnehmungen an den Gehäuseteilen vorgesehen sein, die sich bevorzugt entlang des Behälterumfangs erstrecken. Eine Verbindung über mindestens je drei Vorsprünge und Ausnehmungen, die gleichmäßig verteilt, d.h. in einem Abstand von etwa je 120° angeordnet sind, kann bereits eine gleichmäßige Abdichtung schaffen. Werden jedoch mehr als vier Vorsprünge und Ausnehmungen vorgesehen, so ist die Verkantungsneigung weiter herabgesetzt und das Verschließen des Behälters wird zunehmend erleichtert.

Zwar ist es möglich, die Vorsprünge und Ausnehmungen beispielsweise nach Art einer Verzahnung abwechselnd jeweils an dem einen und dem anderen Gehäuseteil anzuordnen, jedoch ist es sowohl herstellungstechnisch als auch zur Vereinfachung der Bedienung vorteilhaft, die Vorsprünge an dem einen Gehäuseteil und die Ausnehmungen in dem anderen Gehäuseteil anzuordnen.

Die Vorsprünge können durch eine schräge Anordnung oder eine hakenartige Ausbildung eine Verbindung mit dem anderen Gehäuseteil bewirken. Bevorzugt wird jedoch eine Ausbildung, bei der die Vorsprünge endseitige Verbreiterungen bzw. Verdickungen aufeisen und die Ausnehmungen bereichsweise verjüngt sind, so dass die Verbreiterungen der Vorsprünge bei einer Verschiebung der Gehäuseteile gegeneinander die Ausnehmungen hintergreifen und die Gehäuseteile so gegeneinander verspannen.

Weitere Vorteile und Einzelheiten ergeben sich aus den Unteransprüchen und einem in den Zeichnungen dargestellten Ausführungsbeispiel der Erfindung, das im Folgenden beschrieben wird; es zeigen:
- Fig. 1: einen Fontänenstrahlerzeiger mit Druckwasserbehälter mit abgenommenem Deckel,
- Fig. 2: einen Teilschnitt in Richtung II-II durch den Gegenstand aus Fig. 1 mit aufgesetzten Deckel,
- Fig. 3: eine Explosionsdarstellung des Behälters aus Fig. 1 ohne Deckel,
- Fig. 4: die Elemente aus Fig. 3, zusammengesetzt,
- Fig. 5: ein Detail aus Fig. 4 vor dem Verschließen,
- Fig. 6: das Detail aus Fig. 5 nach Durchführung der Verschlußbewegung,
- Fig. 7: einen Schnitt in Richtung VII-VII durch den Gegenstand aus Fig. 6 und
- Fig. 8: einen Schnitt in Richtung VIII-VIII durch den Gegenstand aus Fig. 6.

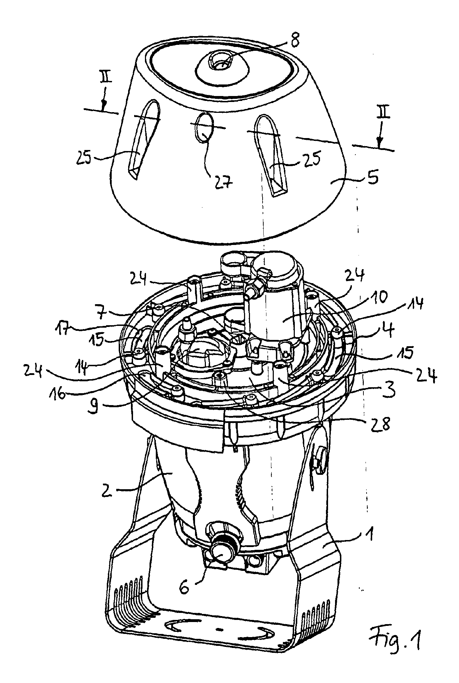

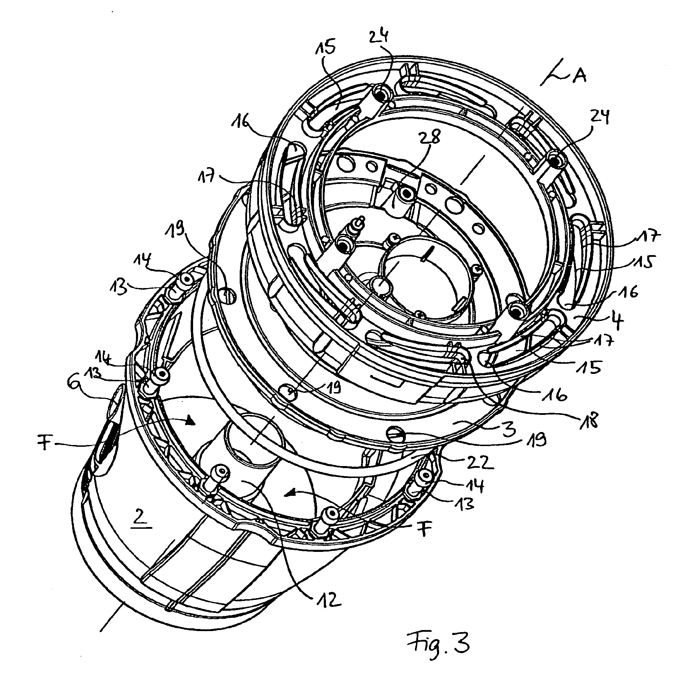

Die Erfindung wird anhand eines als Fontänenstrahlerzeuger ausgebildeten Ausführungsbeispiels erläutert, der am vollständigsten in Fig. 1 dargestellt ist. Er besteht aus einem an einem Standfuß 1 befestigten Druckwasserbehälter, der aus mehreren Gehäuseteilen 2,3,4,5 zusammengesetzt ist. Der untere Gehäuseteil 2 bildet im wesentlichen das Wasserbehältnis und ist überwiegend mit nicht dargestellten Filterschäumen zur Wasserberuhigung gefüllt. Durch einen Zulauf 6 wird über eine nicht dargestellte Pumpe Wasser unter Druck in den Behälter gepumpt, den es über eine Düse 7 und einen Wasseraustritt 8 wieder verläßt. Die Düse 7 ist in einem den wasseraufnehmenden Bereich nach oben abschließenden Gehäuseteil 3 ausgebildet, der später detaillierter beschrieben wird. Oberhalb des Gehäuseteils 3 befinden sich weitere Komponenten, wie beispielsweise ein Turbulenzerzeuger 9 und ein Richtaktuator 10. Das gesamte Gehäuse wird obenseitig von einem Deckel 5 abgeschlossen. Wie in Fig. 3 erkennbar ist, kann das Gehäuse ferner eine Aufnahme 12 aufweisen, in die ein Leuchtaggregat zur Beleuchtung des Wasserstrahls einsetzbar ist.

Zum erfindungsgemäßen Verschluß des Behälters ist der untere Gehäuseteil 2 mit mehreren Vorsprüngen 13,14 versehen, die durch Zapfen 13 mit endseitigen Kugelköpfen 14 gebildet sind. Diese Vorsprünge 13,14 greifen in Ausnehmungen 15 eines den Behälter verschließenden oberen Gehäuseteils 4 ein. Diese Ausnehmungen 15 haben einen vergrößerten Öffnungsbereich 16 und sich daran anschließende seitliche Führungen 17, die die Ausnehmung 15 derart verjüngen, daß die Kugelkopfverbreiterung 14 des korrespondierenden Vorsprungs 13,14 hintergriffen werden.

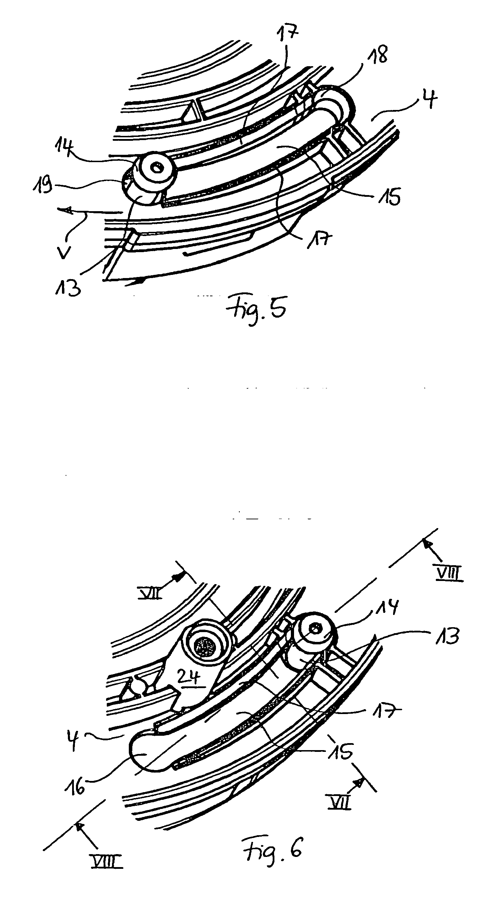

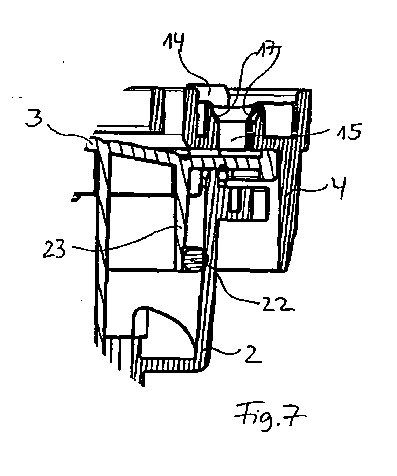

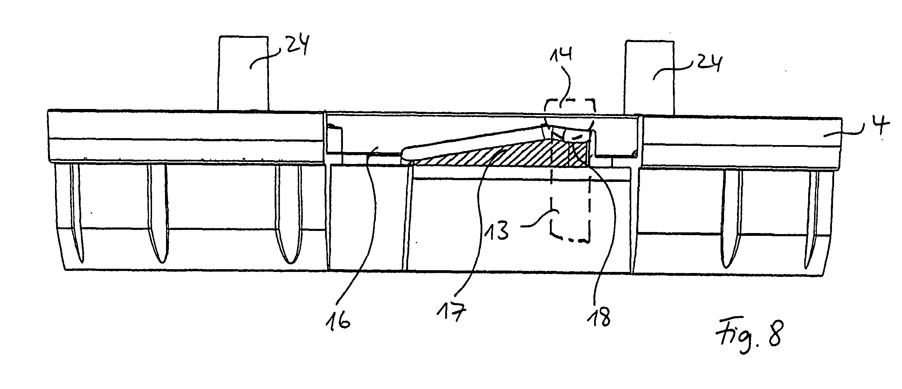

Beim Verschließen des Behälters, was durch eine Verschiebebewegung des oberen Gehäuseteils 4 in Richtung des Pfeils V in Fig. 5 zu der in Fig. 6 dargestellten Position durchgeführt wird, bilden die den Kugelkopf 14 hintergreifenden seitlichen Flanken 17 der Ausnehmungen 15 eine Zwangsführung für die Verschiebebewegung der Gehäuseteile 2 und 4 gegeneinander. Diese seitlichen Führungen 17 sind wie in Fig. 8 deutlich erkennbar rampenartig ansteigend ausgebildet, so daß bei der Verschlußbewegung der obere Gehäuseteil 4 automatisch dichter an den unteren Gehäuseteil 2 herangezogen wird. Um die Verschlußbewegung möglichst kraftarm ausführen zu können, sind die seitlichen Führungen 17 dabei wie in Fig. 7 erkennbar, im oberen bereich der Kugelkopfform 14 der Vorsprünge 13,14 angepaßt. Als Kugelkopf im Sinne der Erfindung ist dabei nicht ausschließlich eine vollständig kugelige Form anzusehen, sondern auch eine solche, die sich im oberen Bereich 14 der Vorsprünge 13,14 lediglich gleitbegünstigend verbreitert. Diese kann insbesondere auch wie dargestellt obenseitig abgeschnitten sein. Um eine gewisse Arretierung der Gehäuseverbindung zu erreichen, sind die Führungen 17 wie in Fig. 8 erkennbar so ausgebildet, dass sie in der Verschlußposition gegenüber den Vorsprüngen 13,14 im Endbereich 18 der Ausnehmungen 15 wieder abfallen bzw. zurückspringen. Dadurch wird verhindert, dass die Vorsprünge 13,14 selbsttätig in den Ausnehmungen 15 zurückrutschen können, und es wird eine fühlbare Signalisierung des Erreichens der Verschlußposition erzielt.

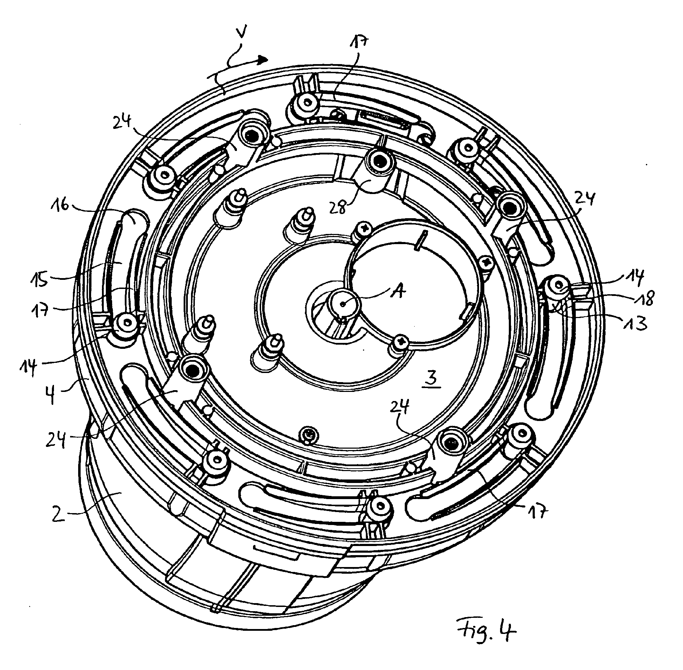

Wie insbesondere in den Fig. 3 und 4 erkennbar ist, sind die Ausnehmungen 15 langlochartig ausgebildet und äquidistant, ringförmig und rotationssymmetrisch um eine Gehäusemittellängsachse A angeordnet. Die zum Verschließen des Behälters erforderliche Verschiebebewegung V kann somit sehr einfach durch eine Verdrehung der beiden Gehäuseteile 2,4 gegeneinander bewirkt werden. Gleichzeitig erfolgt über die Vielzahl der Vorsprünge 13,14 und Ausnehmungen 15 eine gleichmä-βige Abdichtung, ohne die Gefahr eines Verkantens.

Zwischen den Gehäuseteilen 2 und 4 ist ein Unterteilungselement 3 als Dichtungsplatte angeordnet. Die Dichtungsplatte 3 hat den Vorsprüngen 13,14 entsprechende Löcher 19, durch die sich die Zapfen 13 der Vorsprünge 13,14 bei geschlossenem Behälter hindurcherstrecken. Die Löcher 19 sind dazu so groß ausgebildet, daß die Kugelköpfe 14 der Vorsprünge 13,14 hindurchpassen. Dementsprechend kann die Dichtungsplatte 3 sich gegenüber dem unteren Gehäuseteil 2 nur geringfügig verschieben, nämlich nur insoweit der Durchmesser der Löcher 19 größer ist als der der Zapfen 13. Über einen Ansatz 23 der Dichtungsplatte 3 wird wie Fig. 7 zeigt ein Dichtring 22 beim Verschließen des Behälters gegen die Innenwandung des unteren Gehäuseteils 2 gequetscht und damit eine sichere Abdichtung erreicht. Die Dichtungsplatte 3 trägt damit zur Langlebigkeit des Dichtrings 22 bei, da dieser beim Verschließen und Öffnen des Behälters im wesentlichen nur zusammengedrückt wird, jedoch nahezu keine Schubspannungen aufnehmen muß. Diese werden durch ein Gleiten des bei dieser Ausführungsform als Verschlußring ausgebildeten Gehäuseteils 4 auf der Dichtungsplatte 3 verhindert.

Bei dem in den Fig. dargestellten Fontänenstrahlerzeuger ist der obere Gehäuseteil 4,5 zweiteilig ausgebildet, nämlich aus dem die Ausnehmungen 15 aufweisenden Verschlußring 4, der eine Basis bildet und dem Deckel 5. Der Deckel 5 hat die Form einer Haube und ist mit der Basis 4 über separate Befestigungselemente verbunden. Bei der dargestellten Ausführungsform sind dies nicht dargestellte Schrauben, die über Durchbrüche 25 der Haube 5 in Gewindehülsen 24 der Basis 4 hineingeschraubt werden. Da diese Verschraubung keine weitere Verbindung mit der Dichtungsplatte 3 oder dem unteren Gehäuseteil 2 eingeht, können Haube 5 und Verschlußring 4 gemeinsam vom unteren Gehäuseteil 2 abgenommen werden, ohne die Befestigungselemente zu lösen. Dies ist beispielsweise hilfreich, wenn nur im unteren Gehäuseteil 2 in einem Aufnahmebereich F angeordnete Filterschwämme getauscht werden sollen.

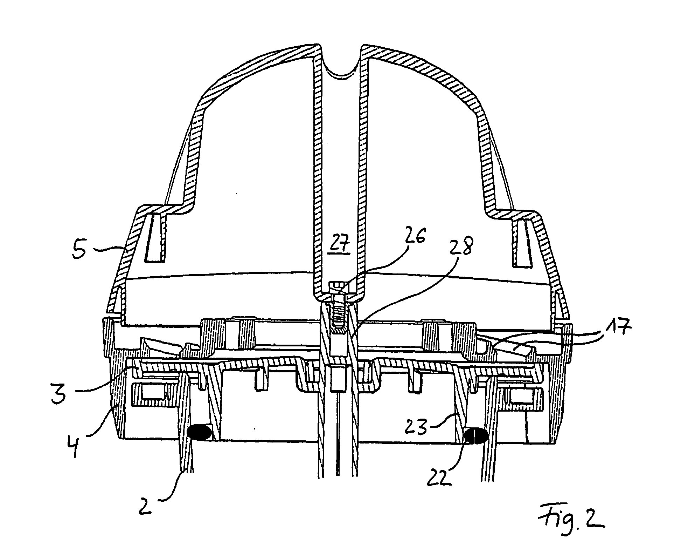

Um ein unbeabsichtigtes Öffnen des Behälters durch Verdrehung der Gehäuseteile 2 und 4 gegeneinander zu verhindern, ist vorzugsweise ein Sicherungselement 26 vorgesehen, das das eine Gehäuseteil 4,5 mit dem anderen Gehäuseteil 2 oder der Dichtungsplatte 3 verbindet. Bei der dargestellten Ausführungsform erfolgt diese Öffnungssicherung mittelbar durch eine Sicherungsschraube 26, die wie in Fig. 2 dargestellt den Deckel 5 mit der Dichtungsplatte 3 verbindet. Damit sind mittelbar auch die Gehäuseteile 2 und 4 verdrehsicher verbunden, da die Sicherungsschraube 26 über eine exzentrisch angeordnete Öffnung 27 in eine korrespondierende Aufnahme 28 eingeschraubt wird. Sowohl das Sicherungselement 26 als auch die Aufnahme 28 können klein dimensioniert sein, da sie lediglich als zusätzliche Sicherung gegen ein unbeabsichtigtes Öffnen dienen, während die gesamten Druckkräfte im Wasserbehälter über die kraft- und formschlüssige Verbindung durch Vorsprünge 13,14, Ausnehmungen 15 und den Dichtring 22 aufgenommen werden.

Der erfindungsgemäße Druckwasserbehälter ist in vorteilhafter Weise auch von einer Person fehlbedienungssicher zu öffnen und zu verschließen und ermöglicht dabei zu Revisionszwecken auf einfache Wiese Zugriff in die gewünschten Behälterbereiche.

## Patentansprüche

1. Druckwasserbehälter, insbesondere für Springbrunnen-, Teich-, Schwimmbad- oder Aquarientechnik, mit zumindest zwei Gehäuseteilen (2,4,5), zwischen denen zumindest eine Dichtung (22) angeordnet ist und die verschließbar miteinander verbindbar sind, wobei die Gehäuseteile (2, 4,5) Vorsprünge (13,14) und korrespondierende Ausnehmungen (15) aufweisen, die so ausgebildet sind, daß die Vorsprünge (13,14) in die Ausnehmungen (15) eingreifen und durch Verschiebung der Gehäuseteile (2,4,5) gegeneinander diese aneinander fixierbar bzw. in umgekehrter Richtung voneinander lösbar sind, **dadurch gekennzeichnet, dass** zwischen den Gehäuseteilen (2,4,5) ein Unterteilungselement (3) angeordnet ist, das Löcher (19) aufweist, durch die sich die Vorsprünge (13,14) hindurcherstrecken.

2. Druckwasserbehälter nach Anspruch 1, **dadurch gekennzeichnet, dass** die Vorsprünge (13,14) an dem einen Gehäuseteil (2) und die Ausnehmungen (15) in dem anderen Gehäuseteil (4) angeordnet sind.

3. Druckwasserbehälter nach einem der vorausgehenden Ansprüche, **dadurch gekennzeichnet, dass** die Vorsprünge (13,14) endseitige Verbreiterungen (14) und die Ausnehmungen (15) bereichweise Verjüngungen aufweisen.

4. Druckwasserbehälter nach Anspruch 3, **dadurch gekennzeichnet, daß** die Vorsprünge (13,14) als Zapfen (13) mit endseitgen Kugelköpfen (14) ausgebildet sind.

5. Druckwasserbehälter nach einem der vorausgehenden Ansprüche, **dadurch gekennzeichnet, dass** die Ausnehmungen (15) Führungen (17) aufweisen, durch die die Verschiebungsrichtung (V) der Gehäuseteile (2,3,4,5) gegeneinander vorgegeben ist.

6. Druckwasserbehälter nach Anspruch 3 oder 4 und Anspruch 5, **dadurch gekennzeichnet, dass** die Führungen (17) die Verbreiterungen (14) der Vorsprünge (13,14) hintergreifen.

7. Druckwasserbehälter nach Anspruch 5 oder 6, **dadurch gekennzeichnet, dass** die Führungen (17) im wesentlichen rampenartig ansteigend ausgebildet sind.

8. Druckwasserbehälter nach einem der Ansprüche 5 bis 7, **dadurch gekennzeichnet, dass** die Führungen (17) in dem Bereich, in dem die Vorsprünge (13,14) bei verschlossenem Gehäuse (4) positioniert sind, zum Vorsprung (13) hin zumindest geringfügig zurückspringen.

9. Druckwasserbehälter nach einem der vorausgehenden Ansprüche, **dadurch gekennzeichnet, dass** die Ausnehmungen (15) langlochartig ausgebildet sind.

10. Druckwasserbehälter nach einem der vorausgehenden Ansprüche, **dadurch gekennzeichnet, dass** die Vorsprünge (13,14) und Ausnehmungen (15) um eine Gehäuseachse (A) herum mit jeweils identischem Abstand angeordnet sind.

11. Druckwasserbehälter nach einem der vorausgehenden Ansprüche, **dadurch gekennzeichnet, dass** die die Löcher (19) in dem Unterteilungselement (3) so ausgebildet sind, dass sie eine allenfalls geringfügige Verschiebung des Unterteilungselements (3) zu einem die Vorsprünge (13,14) aufweisenden Gehäuseteil (2) zulassen.

12. Druckwasserbehälter nach einem der vorausgehenden Ansprüche, **dadurch gekennzeichnet, dass** der eine Gehäuseteil (4,5 zumindest zweiteilig mit einer Basis (4) und einem Deckel (5) ausgebildet ist, wobei die Ausnehmungen (15) und/oder Vorsprünge (13,14) in bzw. an der Basis (4) ausgebildet sind.

13. Druckwasserbehälter nach Anspruch 12, **dadurch gekennzeichnet, dass** der Deckel (5) mit der Basis (4) über zumindest ein separates Befestigungselement verbindbar ist.

14. Druckwasserbehälter nach einem der vorausgehenden Ansprüche, **dadurch gekennzeichnet, dass** die Gehäuseteile (2,3,4,5) durch zumindest ein Sicherungselement (26) gegen eine Verschiebung gegeneinander sicherbar sind.

15. Druckwasserbehälter nach Anspruch 14, **dadurch gekennzeichnet, dass** das Sicherungselement (26) das eine Gehäuseteil (4,5) mit dem anderen Gehäuseteil (2) und/oder dem Unterteilungselement (3) verbindet.

16. Druckwasserbehälter nach Anspruch 12 oder 13 und Anspruch 15, **dadurch gekennzeichnet, dass** das Sicherungselement (26) den Deckel (5) mit dem anderen Gehäuseteil (2) und/oder dem Unterteilungselement (3) verbindet.

17. Druckwasserbehälter nach einem der vorausgehenden Ansprüche, **gekennzeichnet durch** einen Aufnahmebereich (F) für Filterelemente.

18. Fontänenstrahlerzeuger, **gekennzeichnet durch** einen Druckwasserbehälter nach einem der Ansprüche 1 bis 17.

## Claims

1. A pressure water container in particular for water fountain, pond, swimming pool and aquarium technology, comprising at least two housing parts (2, 4, 5), between which at least one seal (22) is disposed and which can be connected to one another in a closable manner, wherein the housing parts (2, 4, 5) comprise projections (13, 14) and corresponding recesses (15), which are constituted such that the projections (13, 14) engage into the recesses (15) and, by a displacement of the housing parts (2, 4, 5) towards one another, the latter can be fixed to one another and, in the opposite direction, can be released from one another, **characterised in that** there is disposed between the housing parts (2, 4, 5) a dividing element (3), which comprises holes (19) through which the projections (13, 14) extend.

2. The pressure water container according to claim 1, **characterised in that** the projections (13, 14) are disposed on the one housing part (2) and the recesses (15) are disposed in the other housing part (4).

3. The pressure water container according to any one of the preceding claims, **characterised in that** the projections (13, 14) comprise terminal widened portions (14) and the recesses (15) comprise tapering portions in zones.

4. The pressure water container according to claim 3, **characterised in that** the projections (13, 14) are formed as pins (13) with terminal spherical heads (14).

5. The pressure water container according to any one of the preceding claims, **characterised in that** the recesses (15) comprise guides (17), by means of which the displacement direction (V) of the housing parts (2, 3, 4, 5) relative to one another is specified.

6. The pressure water container according to claim 3 or 4 and 5, **characterised in that** the guides (17) engage behind the widened portions (14) of the projections (13, 14).

7. The pressurised water container according to claim 5 or 6, **characterised in that** the guides (17) are formed ascending essentially ramp-like.

8. The pressurised water container according to any one of claims 5 to 7, **characterised in that** the guides (17), in the region in which the projections (13, 14) are positioned when the housing (4) is closed, are at least slightly set back relative to the projection (13).

9. The pressurised water container according to any one of the preceding claims, **characterised in that** the recesses (15) are constituted in the form of elongated slots.

10. The pressurised water container according to any one of the preceding claims, **characterised in that** the projections (13, 14) and the recesses (15) are disposed about a housing axis (A) with in each case an identical spacing.

11. The pressurised water container according to any one of the preceding claims, **characterised in that** the holes (19) in the separation element are constituted such that they permit an at most slight displacement of the separation element (3) relative to a housing part (2) comprising the projections (13, 14).

12. The pressurised water container according to any one of the preceding claims, **characterised in that** the one housing part (4, 5) is constituted in at least two parts with a base (4) and a lid (5), wherein the recesses (15) and/or the projections (13, 14) are formed respectively in or on the base (4).

13. The pressurised water container according to claim 12, **characterised in that** the lid (5) can be connected to the base (4) by at least one separate fastening element.

14. The pressurised water container according to any one of the preceding claims, **characterised in that** the housing parts (2, 3, 4, 5) can be secured against displacement relative to one another by at least one safety element (26).

15. The pressurised water container according to claim 14, **characterised in that** the safety element (26) connects the one housing part (4, 5) to the other housing part (2) and/or to the separation element (3).

16. The pressurised water container according to claim 12 or 13 and claim 15, **characterised in that** the safety element (26) connects the lid (5) to the other housing part (2) and/or to the separation element (3).

17. The pressurised water container according to any one of the preceding claims, **characterised by** a receiving region (F) for filter elements.

18. A fountain jet generator, **characterised by** a pressurised water container according to any one of claims 1 to 17.

## Revendications

1. Récipient d'eau sous pression, en particulier pour fontaines, étangs, piscines ou aquariums, avec au moins deux parties de carter (2, 4, 5) entre lesquelles est agencé au moins un joint (22) et qui peuvent être reliées l'une à l'autre de façon obturable, dans lequel les parties de carter (2, 4, 5) présentent des saillies (13, 14) et des évidements correspondants (15) qui sont réalisés de telle sorte que les saillies (13, 14) viennent en prise dans les évidements (15) et ceux-ci peuvent être fixés l'un à l'autre par déplacement des parties de carter (2, 4, 5) l'une contre l'autre ou être détachés l'un de l'autre dans le sens inverse, **caractérisé en ce qu'**un élément de division (3) qui présente des trous (19) par lesquels s'étendent les saillies (13, 14) est agencé entre les parties de carter (2, 4, 5).

2. Récipient d'eau sous pression selon la revendication 1, **caractérisé en ce que** les saillies (13, 14) sont agencées au niveau d'une partie de carter (2) et les évidements (15) sont agencés dans l'autre partie de carter (4).

3. Récipient d'eau sous pression selon l'une quelconque des revendications précédentes, **caractérisé en ce que** les saillies (13, 14) présentent des élargissements (14) côté extrémité et les évidements (15) présentent des rétrécissements par zone.

4. Récipient d'eau sous pression selon la revendication 3, **caractérisé en ce que** les saillies (13, 14) sont réalisées sous forme de broche (13) à têtes sphériques (14) côté extrémité.

5. Récipient d'eau sous pression selon l'une quelconque des revendications précédentes, **caractérisé en ce que** les évidements (15) présentent des guidages (17) par lesquels le sens de déplacement (V) des parties de carter (2, 3, 4, 5) l'une contre l'autre est prédéfini.

6. Récipient d'eau sous pression selon la revendication 3 ou 4 et la revendication 5, **caractérisé en ce que** les guidages (17) viennent en prise derrière les élargissements (14) des saillies (13, 14).

7. Récipient d'eau sous pression selon la revendication 5 ou 6, **caractérisé en ce que** les guidages (17) sont réalisés essentiellement sous forme de rampe ascendante.

8. Récipient d'eau sous pression selon l'une quelconque des revendications 5 à 7, **caractérisé en ce que** les guidages (17) reviennent au moins légèrement en arrière vers la saillie (13) dans la zone dans laquelle les saillies (13, 14) sont positionnées lorsque le carter (4) est fermé.

9. Récipient d'eau sous pression selon l'une quelconque des revendications précédentes, **caractérisé en ce que** les évidements (15) sont réalisés sous forme de trou oblong.

10. Récipient d'eau sous pression selon l'une quelconque des revendications précédentes, **caractérisé en ce que** les saillies (13, 14) et les évidements (15) sont agencés autour d'un axe de carter (A) à une distance respectivement identique.

11. Récipient d'eau sous pression selon l'une quelconque des revendications précédentes, **caractérisé en ce que** les trous (19) sont réalisés dans l'élément de division (3) de telle sorte qu'ils permettent tout au plus un faible déplacement de l'élément de division (3) vers une partie de carter (2) présentant les saillies (13, 14).

12. Récipient d'eau sous pression selon l'une quelconque des revendications précédentes, **caractérisé en ce qu'**une partie de carter (4, 5) est formée d'au moins deux parties avec une base (4) et un couvercle (5), dans lequel les évidements (15) et/ou saillies (13, 14) sont réalisés dans ou au niveau de la base (4).

13. Récipient d'eau sous pression selon la revendication 12, **caractérisé en ce que** le couvercle (5) peut être relié à la base (4) par le biais d'au moins un élément de fixation séparé.

14. Récipient d'eau sous pression selon l'une quelconque des revendications précédentes, **caractérisé en ce que** les parties de carter (2, 3, 4, 5) peuvent être protégées contre un déplacement l'une contre l'autre par au moins un élément de blocage (26).

15. Récipient d'eau sous pression selon la revendication 14, **caractérisé en ce que** l'élément de blocage (26) relie une partie de carter (4, 5) à l'autre partie de carter (2) et/ou à l'élément de division (3).

16. Récipient d'eau sous pression selon la revendication 12 ou 13 et la revendication 15, **caractérisé en ce que** l'élément de blocage (26) relie le couvercle (5) à l'autre partie de carter (2) et/ou à l'élément de division (3).

17. Récipient d'eau sous pression selon l'une quelconque des revendications précédentes, **caractérisé par** une zone de réception (F) pour éléments filtrants.

18. Générateur de jet de fontaine, **caractérisé par** un récipient d'eau sous pression selon l'une quelconque des revendications 1 à 17.
